# EUROPÄISCHE PATENTANMELDUNG

(11) **EP 1 477 521 A2**
(43) Veröffentlichungstag der Anmeldung: **17.11.2004**
(21) Anmeldenummer: 04010541.3
(22) Anmeldetag: 04.05.2004
(51) Int. Cl.: C08K 5/521, C08K 5/02

(54) **Flammwidrige duroplastische Massen, ihre Verwendung und Verfahren zu ihrer Herstellung**

(30) Priorität: 13.05.2003 DE 10321297
(71) Anmelder: Clariant GmbH, 65929 Frankfurt am Main (DE)
(72) Erfinder: Knop, Susanne, Dr., 22455 Hamburg (DE); Sicken, Martin, Dr., 51149 Köln (DE); Hörold, Sebastian, Dr., 86420 Diedorf (DE)
(74) Vertreter: Paczkowski, Marcus, Dr.

(57) **Zusammenfassung**

Die Erfindung betrifft flammwidrige duroplastische Massen, dadurch gekennzeichnet, dass sie als Flammschutzmittelkombination mindestens ein Phosphinsäuresalz der Formel (I) und/oder ein Diphosphinsäuresalz der Formel (II) und/oder deren Polymere (Komponente A), 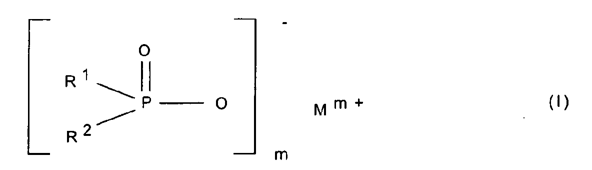 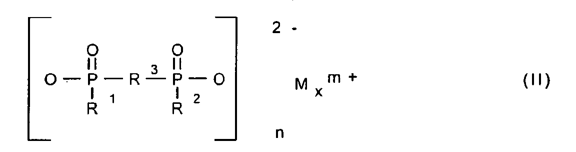 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, sowie mindestens eine synergistisch wirkende halogenhaltige Komponente B enthält. Die Erfindung betrifft auch ein Verfahren zur Herstellung dieser flammwidrigen duroplastischen Massen sowie ihre Verwendung.

## Beschreibung

Die Erfindung betrifft flammwidrige duroplastische Massen, ein Verfahren zu ihrer Herstellung und ihre Verwendung.

Bauteile aus duroplastischen Harzen, insbesondere solche, die glasfaserverstärkt sind, zeichnen sich durch ihre guten mechanischen Eigenschaften, ihre geringe Dichte, weitgehende Chemikalienresistenz und ihre ausgezeichnete Oberflächenqualität aus. Dies und ihr günstiger Preis haben dazu geführt, dass sie in den Anwendungsbereichen Schienenfahrzeuge, Bauwesen und Luftfahrt zunehmend metallische Werkstoffe ersetzen.

Wegen ihrer Brennbarkeit benötigen ungesättigte Polyesterharze (UP-Harze), Epoxidharze (EP-Harze) und Polyurethane (PU-Harze) für einige Anwendungen Flammschutzmittel. Zunehmende Anforderungen des Marktes an den Brandschutz und an die Umweltfreundlichkeit von Produkten erhöhen das Interesse an halogenfreien Flammschutzmitteln wie z.B. Phosphorverbindungen oder Metallhydroxide.

Abhängig vom Anwendungsgebiet werden unterschiedliche Anforderungen hinsichtlich mechanischer, elektrischer und brandschutztechnischer Eigenschaften gestellt. Insbesondere im Bereich Schienenfahrzeuge wurden die Brandschutzanforderungen in letzter Zeit verschärft.

Es ist bekannt, ungesättigte Polyesterharze dadurch flammwidrig einzustellen, dass brom- oder chlorhaltige Säure- bzw. Alkoholkomponenten verwendet werden. Beispiele sind Hexachloroendomethylentetrahydrophthalsäure (HET-Säure), Tetrabromphthalsäure oder Dibromneopentylglycol. Als Synergist wird häufig Antimontrioxid verwendet.

In der JP 05245838 (CA 1993: 672700) werden zur Verbesserung der Flammwidrigkeit Aluminiumhydroxid, roter Phosphor und Antimontrioxid mit einem bromierten Harz kombiniert. Nachteilig an brom- oder chlorhaltigen Harzen ist, dass im Brandfall korrosive Gase entstehen, was zu erheblichen Schäden an elektronischen Bauteilen, beispielsweise an Relais in Schienenfahrzeugen, führen kann. Unter ungünstigen Bedingungen können auch polychlorierte bzw. bromierte Dibenzodioxine und Furane entstehen. Es besteht von daher ein Bedarf den Anteil an halogenhaltigen Flammschutzmitteln in ungesättigten Polyesterharzen und - Formmassen zu reduzieren.

Ungesättigte Polyesterharze und -Formmassen können bekannterweise mit Füllstoffen wie Aluminiumhydroxid ausgerüstet werden. Durch die Wasserabspaltung von Aluminiumhydroxid bei höheren Temperaturen wird eine gewisse Flammwidrigkeit erreicht. Bei Füllgraden von 150-200 Teilen Aluminiumhydroxid pro 100 Teilen UP-Harz können kann ein Selbstverlöschen und eine geringe Rauchgasdichte erreicht werden. Nachteilig bei derartigen Systemen ist das hohe spezifische Gewicht, das man beispielsweise durch den Zusatz von Hohlglaskugeln zu verringern sucht [Staufer, G., Sperl, M., Begemann, M., Buhl, D., Düll-Mühlbach, I., Kunststoffe 85 (1995), 4].

In der PL 159350 (CA 1995: 240054) werden Laminate aus ungesättigten Polyesterharzen mit bis zu 180 Teilen Magnesiumhydroxid beschrieben. Bedingt durch die hohe Viskosität des ungehärteten UP-Harzes mit dem Aluminiumhydroxid bzw. Magnesiumhydroxid kann mit derartigen Rezepturen allerdings nicht nach dem technisch äußerst wichtigen Injektionsverfahren gearbeitet werden.

Auch die weiter unten beschriebenen Verfahren zur Einstellung einer Flammwidrigkeit bei ungesättigten Polyesterharzen weisen ebenfalls eine Reihe von Nachteilen, insbesondere einen sehr hohen Füllstoffgehalt auf.

Zur Verringerung des gesamten Füllstoffgehaltes kann Aluminiumhydroxid mit Ammoniumpolyphosphat, wie in der DE-A-37 28 629 beschrieben, kombiniert werden. Die Verwendung von rotem Phosphor als Flammschutzmittel für ungesättigte Polyesterharze ist in der JP 57016017 (CA96(22): 182248) und die Kombination von Aluminiumhydroxid, rotem Phosphor und Antimontrioxid in der JP-55 094 918 (CA93(24): 22152t) beschrieben.

Eine geringe Rauchgasdichte und Zersetzungsprodukte geringer Toxizität werden in der PL 161 333 (CA 1994: 632278) durch die Verwendung von Aluminiumhydroxid, Magnesiumhydroxid oder basischem Magnesiumcarbonat, rotem Phosphor und gegebenenfalls hochdisperser Kieselsäure erreicht. Darüber hinaus wird die Verwendung von Melamin und Aluminiumhydroxid in der DE-A-2 159 757 beansprucht.

Da Aluminiumhydroxid allein kein sehr wirksames Flammschutzmittel für ungesättigte Polyesterharze und für Epoxidharze darstellt, werden zur Verringerung des Füllstoffanteils auch Kombinationen mit rotem Phosphor vorgeschlagen. Nachteilig dabei ist allerdings die rote Eigenfarbe des Produktes, was den Einsatz auf dunkel eingefärbte Bauteile beschränkt.

Ungesättigte Polyesterharze sind Lösungen von Polykondensationsprodukte aus gesättigten und ungesättigten Dicarbonsäuren oder deren Anhydriden mit Diolen in copolymerisierbaren Monomeren, vorzugsweise Styrol oder Methylmethacrylat. UP-Harze werden gehärtet durch radikalische Polymerisation mit Initiatoren (z.B. Peroxiden) und Beschleunigern. Die Doppelbindungen der Polyesterkette reagieren mit der Doppelbindung des copolymerisierbaren Lösungsmittelmonomers. Die wichtigsten Dicarbonsäuren zur Herstellung der Polyester sind Maleinsäureanhydrid, Fumarsäure und Terephthalsäure. Das am häufigsten verwendete Diol ist 1,2-Propandiol. Darüber hinaus werden auch Ethylenglycol, Diethylenglykol und Neopentylglykol u.a. verwendet. Das geeignetste Monomer zur Vernetzung ist Styrol. Styrol ist beliebig mit den Harzen mischbar und lässt sich gut copolymerisieren. Der Styrolgehalt in ungesättigten Polyesterharzen liegt normalerweise zwischen 25 und 40 %. Anstelle von Styrol kann auch Methylmethacrylat als Monomeres verwendet werden.

Ungesättigte Polyesterharze unterscheiden sich in ihren chemischen und physikalischen Eigenschaften sowie in ihrem Brandverhalten wesentlich von den namens-ähnlichen Polyestern, bei denen es sich jedoch in Gegensatz zu den vorgenannten ungesättigten Polyesterharzen um thermoplastische Polymere handelt. Diese Polyester werden auch durch völlig andere Verfahren als wie sie im vorhergehenden Absatz für die ungesättigten Polyesterharze beschrieben sind, hergestellt. Polyester lassen sich beispielsweise durch Ringöffnungspolymerisation von Lactonen oder durch Polykondensation von Hydroxycarbonsäuren herstellen, man erhält dann Polymere der allgemeinen Formel -[O-R-(CO)]-. Bei der Polykondensation von Diolen und Dicarbonsäuren bzw. Derivaten von Dicarbonsäuren erhält man Polymere der allgemeinen Formel -[O-R¹-O-(CO)-R²-(CO)]-. Verzweigte und vernetzte Polyester können durch Polykondensation von drei- oder mehrwertigen Alkoholen mit polyfunktionellen Carbonsäuren erhalten werden.

Ungesättigte Polyesterharze und Polyester sind also zwei völlig unterschiedliche Polymere bzw. stellen völlig unterschiedliche Polymergruppen dar.

Eine andere Gruppe von Duroplasten, die Epoxidharze, werden heute zur Herstellung von Formmassen und Beschichtungen mit hohen thermischen, mechanischen und elektronischen Eigenschaften eingesetzt.

Epoxidharze sind Verbindungen, die durch Polyadditionsreaktion von einer Epoxidharz-Komponente und einer Vernetzungs-(Härter) Komponente hergestellt werden. Als Epoxidharz Komponente werden aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet.
Als Härter finden Polyamine wie Triethylentetramin, Aminoethylpiperazin und Isophorondiamin, Polyamidoamine, mehrbasige Säure oder deren Anhydride wie z.B. Phthalsäureanhydrid, Hexahydrophthalsäureanhydrid, Methyltetrahydrophthalsäureanhydrid oder Phenole Verwendung. Die Vernetzung kann auch durch Polymerisa-tion unter Verwendung geeigneter Katalysatoren erfolgen.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Epoxidharze für Leiterplatten werden nach dem bisherigen Stand der Technik durch Einreagieren bromhaltiger aromatischen Verbindungen, insbesondere Tetrabrombisphenol A, flammwidrig eingestellt. Nachteilig ist, dass im Brandfall Bromwasserstoff (Gefahrstoff!) freigesetzt wird, was zu Schäden durch Korrosion führen kann. Unter ungünstigen Bedingungen können auch polybromierte Dibenzodioxine und Furane entstehen. Daher ist es anzustreben, den Anteil an halogenhaltigen Flammschutzmitteln zu reduzieren. Die Verwendung von Aluminiumhydroxid scheidet wegen der bei der Verarbeitung erfolgenden Wasserabspaltung vollständig aus.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.
Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

Es wurde nun überraschenderweise gefunden, dass Salze von Phosphinsäuren in Kombination mit einer Reihe synergistisch wirkender halogenhaltiger Verbindungen sich als effektive Flammschutzmittel für duroplastische Harze wie ungesättigte Polyesterharze oder Epoxidharze erweisen.

Alkalisalze von Phosphinsäuren sind bereits als flammhemmende Zusätze für thermoplastische Polyester vorgeschlagen (DE-A-44 30 932). Sie müssen in Mengen bis zu 30 Gew.-% zugesetzt werden. Weiterhin sind die Salze von Phosphinsäuren mit einem Alkalimetall oder einem Metall aus der zweiten oder dritten Hauptgruppe des Periodensystems zur Herstellung flammwidriger PolyamidFormmassen eingesetzt worden, insbesondere die Zinksalze (DE-A-2 447 727). Im Brandverhalten unterscheiden sich thermoplastische Polyester wie PET und PBT und duroplastische Polyester wie ungesättigte Polyesterharze deutlich: Thermoplastische Materialien tropfen im Brandfall ab, duroplastische Materialien dagegen schmelzen nicht und tropfen auch nicht ab.

Die Erfindung betrifft daher flammwidrige duroplastische Massen, dadurch gekennzeichnet, dass sie als Flammschutzmittelkombination mindestens ein Phosphinsäuresalz der Formel (I) und/oder ein Diphosphinsäuresalz der Formel (II) und/oder deren Polymere (Komponente A), 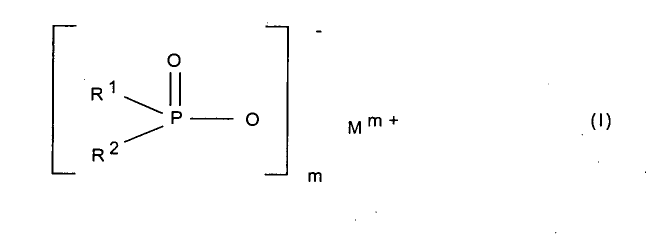 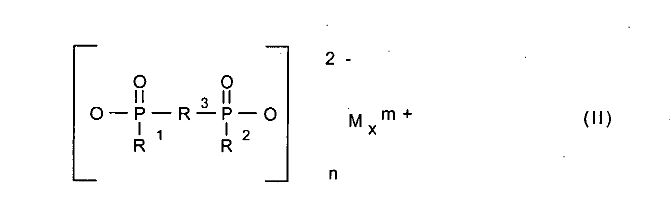 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Aryl-alkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, sowie mindestens eine synergistisch wirkende halogenhaltige Komponente B enthält.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethylnaphthylen oder tert.-Butylnaphthylen.

Bevorzugt bedeutet R³ auch Phenyl-methylen, Phenyl-ethylen, Phenyl-propylen oder Phenyl-butylen.

Bevorzugt handelt es sich bei der halogenhaltigen Komponente B um brom- oder chlorhaltige Säure- bzw. Alkoholkomponenten oder um brom- oder chlorhaltige aromatische und aliphatische Verbindungen.

Bevorzugt handelt es sich bei den brom- oder chlorhaltigen Säure- bzw. Alkoholkomponenten um Hexachloroendomethylentetrahydrophthalsäure, Tetrabromphthalsäure, Tetrabromphthalsäureanhydrid, Dibromneopentylglycol, Trischlorethylphosphat und/oder Trischlorpropylphosphat.

Bevorzugt handelt es sich bei den brom- oder chlorhaltigen aromatischen Verbindungen um Tetrabrombisphenol A, Decabromdiphenylether, Hexabromcyclododecan, Chlorparaffine und/oder Dodecachlorpentacyclooctadecadien.

Bevorzugt enthält die erfindungsgemäße Flammschutzmittel-Kombination als weitere Komponente C mindestens eine Stickstoff-, Phosphor- oder Phosphor-Stickstoffverbindung.

Bevorzugt handelt es sich bei der Komponente C um Melaminphosphat, Dimelaminphosphat, Melaminpyrophosphat, Melaminpolyphosphate, Melampolyphosphate, Melempolyphosphate und/oder Melonpolyphosphate.

Bevorzugt handelt es sich bei der Komponente C um Melaminkondensationsprodukte wie Melam, Melem und/oder Melon.

Bevorzugt handelt es sich bei der Komponente C um Stickstoffverbindungen der Formeln (III) bis (VIII) oder Gemische davon 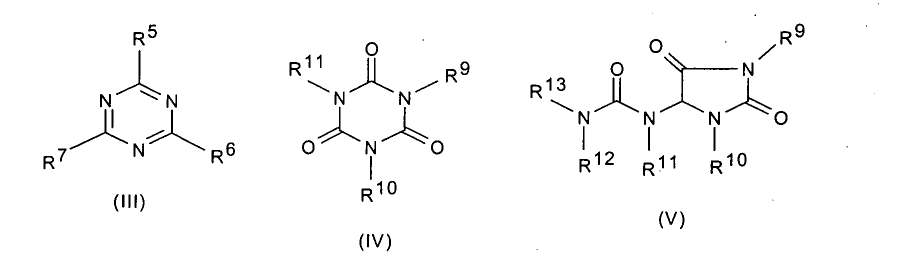 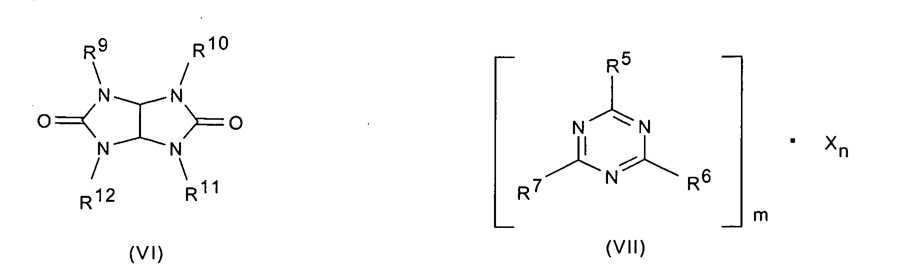 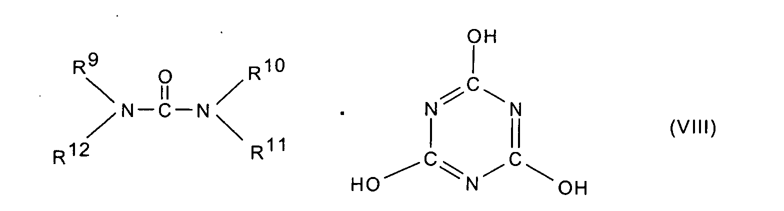 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

Bevorzugt handelt es sich bei der Komponente C um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide.

Bevorzugt enthält die erfindungsgemäße Flammschutzmittel-Kombination stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt enthält die erfindungsgemäße Flammschutzmittel-Kombination als Komponente D eine synthetische anorganische Verbindung und/oder ein mineralisches Produkt.

Bevorzugt handelt es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthalten die erfindungsgemäßen flammwidrigen duroplastischen Massen 0,1 bis 30 Masseteile mindestens eines Phosphinsäuresalzes der Formel (I) und/oder ein Diphosphinsäuresalz der Formel (II) und/oder deren Polymere (Komponente A) und 0,1 bis 50 Masseteile halogenhaltige Komponente B je 100 Masseteile duroplastischer Masse.

Bevorzugt enthalten die erfindungsgemäßen flammwidrigen duroplastischen Massen 1 bis 15 Masseteile mindestens eines Phosphinsäuresalzes der Formel (I) und/oder ein Diphosphinsäuresalz der Formel (II) und/oder deren Polymere (Komponente A) und 1 bis 20 Masseteile halogenhaltige Komponente B je 100 Masseteile duroplastischer Masse.

Bevorzugt enthalten die erfindungsgemäßen flammwidrigen duroplastischen Massen 1 bis 15 Masseteile Phosphinsäuresalz der Formel (I) und/oder ein Diphosphinsäuresalz der Formel (II) und/oder deren Polymere (Komponente A), 1 bis 20 Masseteile halogenhaltige Komponente B sowie jeweils 0 bis 15 Masseteile Komponente C und D je 100 Masseteile duroplastischer Masse.

Die Erfindung betrifft auch flammwidrige duroplastische Massen, dadurch gekennzeichnet, dass es sich hierbei um Formmassen, Beschichtungen oder Laminate aus duroplastischen Harzen handelt.

Bevorzugt handelt es sich bei den duroplastischen Harzen um ungesättigte Polyesterharze oder um Epoxidharze.

Die Erfindung betrifft ebenfalls ein Verfahren zur Herstellung von flammwidrigen duroplastischen Massen, dadurch gekennzeichnet, dass man ein duroplastisches Harz mit einer Flammschutzmittelkombination aus mindestens einem Phosphinsäuresalz der Formel (I) und/oder ein Diphosphinsäuresalz der Formel (II) und/oder deren Polymere (Komponente A) mit mindestens einer synergistisch wirkenden halogenhaltigen Komponente B vermischt und die resultierende Mischung bei Drücken von 3 bis 10 bar und Temperaturen von 20 bis 80°C nass presst (Kaltpressung).

Die Erfindung betrifft auch ein Verfahren zur Herstellung von flammwidrigen duroplastischen Massen, dadurch gekennzeichnet, dass man ein duroplastisches Harz mit einer Flammschutzmittelkombination aus mindestens einem Phosphinsäuresalz der Formel (I) und/oder ein Diphosphinsäuresalz der Formel (II) und/oder deren Polymere (Komponente A) mit mindestens einer synergistisch wirkenden halogenhaltigen Komponente B vermischt und die resultierende Mischung bei Drücken von 3 bis 10 bar und Temperaturen von 80 bis 150°C nass presst (Warm- oder Heißpressung).

Ein weiteres Verfahren zur Herstellung von flammwidrigen duroplastischen Massen gemäß der vorliegenden Erfindung ist dadurch gekennzeichnet, dass man ein duroplastisches Harz mit einer Flammschutzmittelkombination aus mindestens einem Phosphinsäuresalz der Formel (I) und/oder ein Diphosphinsäuresalz der Formel (II) und/oder deren Polymere (Komponente A) mit mindestens einer synergistisch wirkenden halogenhaltigen Komponente B vermischt und aus der resultierenden Mischung bei Drücken von 50 bis 150 bar und Temperaturen von 140 bis 160°C Kunstharzmatten fertigt.

Prepregs können hergestellt werden, indem ein duroplastisches, lösungsmittelhaltiges Harz mit den Komponenten A und B vermischt, ein Verstärkungsmaterial mit dieser Mischung benetzt und diese bei Drücken von 1 bis 20 bar und Temperaturen von 100 bis 200°C anreagieren lässt, so dass nach obigen Methoden verpressbare Prepregs entstehen.

Bei den vorgenannten Verfahren können die Komponenten C und/oder D bei Bedarf an passender Stelle zugefügt/eingearbeitet werden.

Die Salze der Phosphinsäuren, wie sie gemäß der Erfindung eingesetzt werden, können nach bekannten Methoden hergestellt werden, die beispielsweise in der EP-A-0 699 708 näher beschrieben sind.

Wie in den nachstehenden Beispielen ausgeführt ist, hat sich gezeigt, dass halogenhaltige Komponenten und Salze von Phosphinsäuren der allgemeinen Formel (I) bzw. (II) für sich allein geprüft in duroplastischen Harzen wenig wirksam sind.

Überraschenderweise wurde nun gefunden, dass eine Kombination aus Phosphinsäuresalzen halogenhaltigen Komponenten geeignet sind, die für duroplastische Kunststoffe beste Brennbarkeitsklasse V-0 nach UL 94 Vertikaltest zu erreichen.

In den Beispielen wurden folgende Verbindungen eingesetzt:

®Alpolit SUP 403 BMT (Vianova Resins GmbH, Wiesbaden), ungesättigtes Polyesterharz, ca. 57 %ig in Styrol, Säurezahl max. 30 mgKOH/g, vorbeschleunigt und schwach thixotrop eingestellt, niedrigviskos (Viskosität im Auslaufbecher 4 mm: 110 ± 10 s) und stark reduzierte Styrolemissionen.

®Palatal 340 S (DSM-BASF Structural Resins, Ludwigshafen) ungesättigtes Polyesterharz, ca. 49 %ig in Styrol und Methylmethacrylat, Dichte 1,08 g/ml, Säurezahl 7 mgKOH/g, vorbeschleunigt, niedrigviskos (dynamische Viskosität ca. 50 mPa*s).

®Beckopox EP 140 (Vianova Resins GmbH, Wiesbaden), niedrigmolekulares Kondensationsprodukt aus Bisphenol A und Epichlorhydrin mit einer Dichte von 1,16 g/ml und einem Epoxidäquivalent von 180-192.

®Beckopox EH 625 (Vianova Resins GmbH, Wiesbaden), modifiziertes aliphatisches Polyamin mit einem H-Aktiväquivalentgewicht von 73 und einer dynamischen Viskosität von ca. 1000 mPa*s

®Modar 835 S (Ashland Composite Polymers Ltd, Kidderminster, GB) modifiziertes Acrylatharz, gelöst in Styrol, Viskosität ca. 55 mPa*s bei 25°C

### Kobaltbeschleuniger NL 49P (Akzo Chemie GmbH, Düren) Kobaltoktoatlösung in Dibutylphtalat mit einem Kobaltgehalt von 1 Masse %

Kobaltbeschleuniger NL 63-10S (Akzo Chemie GmbH, Düren)

®Butanox M 50 (Akzo Chemie GmbH, Düren) Methylethylketonperoxid, mit Dimethylphtalat phlegmatisiert, klare Flüssigkeit mit einem Aktiv-Sauerstoffgehalt von mindestens 9 Masse %

Dibenzoylperoxid Lucidol BT 50 (Akzo Chemie GmbH, Düren)

DEPAL: Aluminiumsalz der Diethylphosphinsäure

### Herstellung der Prüfkörper

Das duroplastische Harz und die Flammschutzmittel-Komponenten sowie gegebenenfalls weitere Additive werden mit einer Dissolverscheibe homogen vermischt. Nach Zugabe des Härters wird nochmals homogenisiert.

Bei ungesättigten Polyesterharzen wird das Harz mit dem Kobaltbeschleuniger vermischt, die Flammschutzmittel-Komponenten zugesetzt und nach Homogenisieren die Härtung durch die Zugabe des Peroxides gestartet.

Bei Epoxidharzen werden die Flammschutzmittel-Komponenten der Epoxidharz-Komponente zugegeben und homogen vermischt. Anschließend wird der Amin- bzw. der Anhydridhärter dazugegeben.

In einer beheizten Presse werden auf einer ®Hostaphan Trennfolie und einem Stahlrahmen zwei Lagen Textilglas-Endlosmatte vom Flächengewicht 450 g/m² eingelegt. Anschließend wird etwa die Hälfte des Harz-Flammschutzmittel-Gemisches gleichmäßig verteilt. Nach Zugabe einer weiteren Glasmatte wird das restliche Harz-Flammschutzmittel-Gemisch verteilt, das Laminat mit einer Trennfolie abgedeckt und bei einer Temperatur von 50°C während einer Stunde bei einem Pressdruck von 10 bar eine Pressplatte von 4 mm Dicke hergestellt.

Die Prüfung des Brandverhaltens wurde nach der Vorschrift von Underwriters Laboratories "Test for Flammability of Plastics Materials - UL 94" in der Fassung vom 02.05.1975 an Prüfkörpern von 127 mm Länge, 12,7 mm Breite und verschiedener Dicke durchgeführt.

Der Sauerstoffindex wurde in einer modifizierten Apparatur in Anlehnung an ASTM_D 2863-74 bestimmt.

### 1. Ergebnisse mit ungesättigten Polyesterharzen

Tabelle 1 zeigt Vergleichsbeispiele mit alleiniger und ein Beispiel mit kombinierter Verwendung von halogenhaltigen Komponenten und DEPAL als Flammschutzmittel für ein ungesättigtes Polyesterharz (Viapal UP 403 BMT).

Mit der erfindungsgemäßen Kombination von DEPAL mit halogenhaltiger Komponente ist durch nur 10 Teile DEPAL mit Zusatz von 10 Teilen TCPP auf 100 Teile ungesättigtes Polyesterharz eine V-0 Einstufung bei einer Laminatdicke von 1,6 mm zu erreichen. Die Laminate können beliebig eingefärbt werden. Aufgrund des geringen Füllstoffgehaltes können diese UP-Harz-Laminate im Injektionsverfahren hergestellt werden.

**Tabelle 1**

| Brennverhalten von ungesättigtem Polyester Harz Laminaten nach UL 94, 30 Gew.-% Textilglas-Endlosmatte, Laminatdicke 1,5 mm, Harz Viapal UP 403 BMT, Härter Butanox M50, Beschleuniger NL 49 P | | | |
|---|---|---|---|
| Beispiel Nr. | Flammschutzmittel Teile/100 Teile Harz | UL 94 - Klassifizierung | LOI |
| 1 | 25 DEPAL* | n.k. | 0,33 |
| 2 | 25 TCPP | n.k. | 0,31 |
| 3 | 50 TCPP | V0 | 0,38 |
| 4 | 10 DEPAL + 10 TCPP | V0 | 0,41 |

| | | | |
|---|---|---|---|
| * DEPAL = Diethylphosphinsäure-Aluminiumsalz n.k. = nicht klassifizierbar nach UL 94 Vertikaltest | | | |

### 2. Ergebnisse mit Epoxidharzen

Die Tabelle 2 zeigt Brandprüfungen mit einem Polyamin gehärteten Epoxidharz (Harz Beckopox EP 140, Härter Beckopox EH 625). Durch die Kombination von DEPAL mit halogenhaltiger Komponente ist durch Zusatz von insgesamt 10 Teilen fester Flammschutzmittel auf 100 Teile Epoxidharz eine V-0 Einstufung bei einer Laminatdicke von 1,5 mm zu erreichen. Mit den Komponenten allein wird dagegen UL 94 V-0 bis zu 150 Teilen Flammschutzmittel nicht erreicht.

**Tabelle 2:**

| Brennverhalten von Epoxidharz-Formkörpern nach UL 94, Materialstärke 1,6 mm Harz 100 teile Beckopox EP 140, Härter 39 Teile Beckopox EH 625 | | | |
|---|---|---|---|
| Beispiel Nr. | Flammschutzmittel Teile/100 Teile Harz | UL 94 - Klassifizierung | LOI |
| 5 (Vgl.) | 10 DEPAL | n. k. | 0,27 |
| 6 (Vgl.) | 20 DEPAL | V-1 | 0,32 |
| 7 (Vgl.) | 20 Tetrabrombisphenol A | n.k. | 0,25 |
| 8 | 10 DEPAL + 10 Tetrabrombisphenol A | V0 | 0,36 |

## Patentansprüche

1. Flammwidrige duroplastische Massen, **dadurch gekennzeichnet, dass** sie als Flammschutzmittelkombination mindestens ein Phosphinsäuresalz der Formel (I) und/oder ein Diphosphinsäuresalz der Formel (II) und/oder deren Polymere (Komponente A). 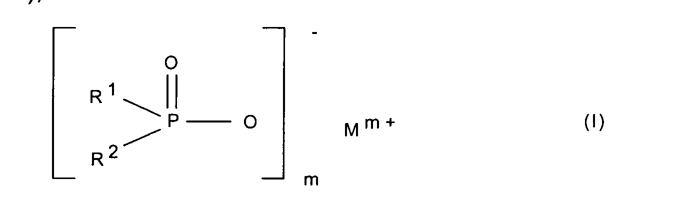 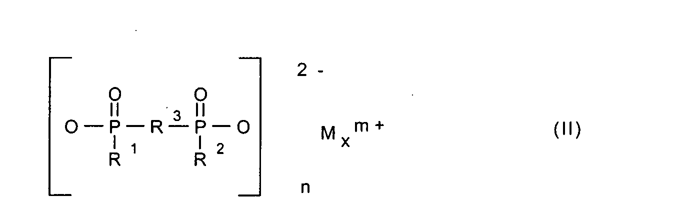 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Aryl-alkylen;
M Mg, Ca, Al, Sb, Sn, Ge, Ti, Zn, Fe, Zr, Ce, Bi, Sr, Mn, Li, Na; K und/oder eine protonierte Stickstoffbase;
m 1 bis 4;
n 1 bis 4;
x 1 bis 4
bedeuten, sowie mindestens eine synergistisch wirkende halogenhaltige Komponente (Komponente B) enthalten.

2. Flammwidrige duroplastische Massen nach Anspruch 1, **dadurch gekennzeichnet, dass** R¹, R² gleich oder verschieden sind und C₁-C₆-Alkyl, linear oder verzweigt und/oder Phenyl bedeuten.

3. Flammwidrige duroplastische Massen nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammwidrige duroplastische Massen nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphtthylen, Ethyl-naphthylen oder tert.-Butylnaphthylen; Phenyl-methylen, Phenyl-ethylen, Phenyl-propylen oder Phenyl-butylen bedeutet.

5. Flammwidrige duroplastische Massen nach einem oder mehreren der Ansprüche 1 bis 4, **dadurch gekennzeichnet, dass** es sich bei der halogenhaltigen Komponente B um brom- oder chlorhaltige Säure- bzw. Alkoholkomponenten oder um brom- oder chlorhaltige aromatische und aliphatische Verbindungen handelt.

6. Flammwidrige duroplastische Massen nach Anspruch 5, **dadurch gekennzeichnet, dass** es sich bei den brom- oder chlorhaltigen Säure- bzw. Alkoholkomponenten um Hexachloroendomethylentetrahydrophthalsäure, Tetrabromphthalsäure, Tetrabromphthalsäureanhydrid, Dibromneopentylglycol, Trischlorethylphosphat und/oder Trischlorpropylphosphat handelt.

7. Flammwidrige duroplastische Massen nach Anspruch 5, **dadurch gekennzeichnet, dass** es sich bei den brom- oder chlorhaltigen aromatischen und aliphatischen Verbindungen um Tetrabrombisphenol A, Decabromdiphenylether, Hexabromcyclododecan, Chlorparaffine und/oder Dodecachlorpentacyclooctadecadien handelt.

8. Flammwidrige duroplastische Massen nach einem oder mehreren der Ansprüche 1 bis 7, **dadurch gekennzeichnet, dass** sie als weitere Komponente C mindestens eine Stickstoff-, Phosphor- oder Phosphor-Stickstoffverbindung enthält.

9. Flammwidrige duroplastische Massen nach Anspruch 8, **dadurch gekennzeichnet, dass** es sich bei der Komponente C um Melaminphosphat, Dimelaminphosphat, Melaminpyrophosphat, Melaminpolyphosphate, Melampolyphosphate, Melempolyphosphate und/oder Melonpolyphosphate handelt.

10. Flammwidrige duroplastische Massen nach Anspruch 8, **dadurch gekennzeichnet, dass** es sich bei der Komponente C um Melaminkondensationsprodukte wie Melam, Melem und/oder Melon handelt.

11. Flammwidrige duroplastische Massen nach Anspruch 8, **dadurch gekennzeichnet, dass** es sich bei der Komponente C um Stickstoffverbindungen der Formeln (III) bis (VIII) oder Gemische davon 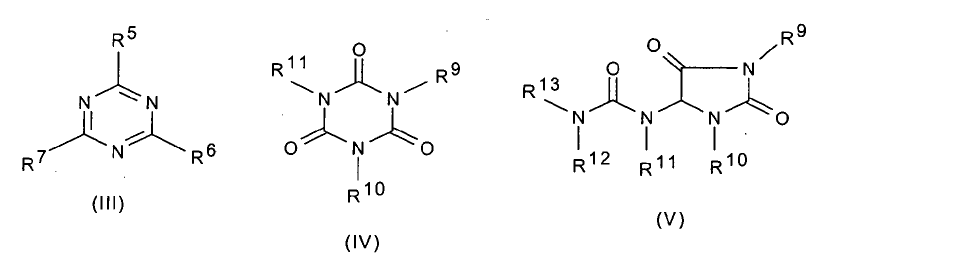 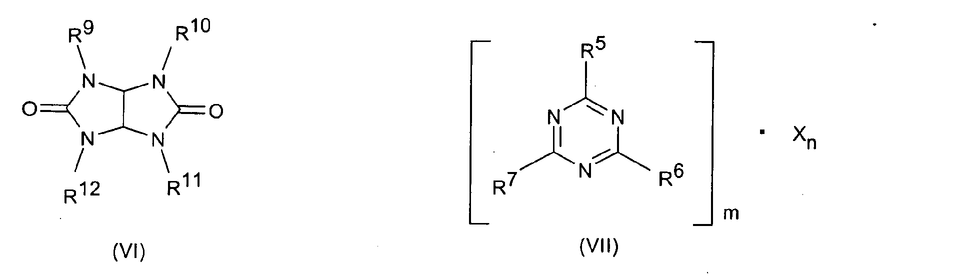 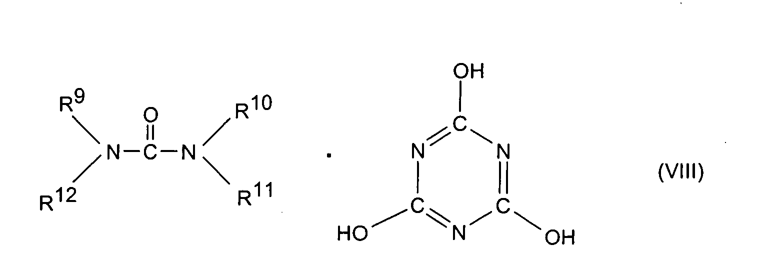 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

12. Flammwidrige duroplastische Massen nach Anspruch 8, **dadurch gekennzeichnet, dass** es sich bei der Komponente C um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

13. Flammwidrige duroplastische Massen nach Anspruch 8, **dadurch gekennzeichnet, dass** es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

14. Flammwidrige duroplastische Massen nach einem oder mehreren der Ansprüche 1 bis 13, **dadurch gekennzeichnet, dass** sie als weitere Komponente D eine synthetische anorganische Verbindung und/oder ein mineralisches Produkt enthält.

15. Flammwidrige duroplastische Massen nach Anspruch 14, **dadurch gekennzeichnet, dass** es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen, handelt.

16. Flammwidrige duroplastische Massen nach Anspruch 15, **dadurch gekennzeichnet, dass** es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

17. Flammwidrige duroplastische Massen nach einem oder mehreren der Ansprüche 1 bis 16, **dadurch gekennzeichnet, dass** sie 0,1 bis 30 Masseteile Phosphinsäuresalz der Formel (I) und/oder ein Diphosphinsäuresalz der Formel (II) und/oder deren Polymere (Komponente A)und 0,1 bis 50 Masseteile halogenhaltige Komponente B je 100 Masseteile duroplastischer Masse enthalten.

18. Flammwidrige duroplastische Massen nach einem oder mehreren der Ansprüche 1 bis 17, **dadurch gekennzeichnet, dass** sie 1 bis 15 Masseteile Phosphinsäuresalz der Formel (I) und/oder ein Diphosphinsäuresalz der Formel (II) und/oder deren Polymere (Komponente A) und 1 bis 20 Masseteile halogenhaltige Komponente B je 100 Masseteile duroplastischer Masse enthalten.

19. Flammwidrige duroplastische Massen nach einem oder mehreren der Ansprüche 1 bis 17, **dadurch gekennzeichnet, dass** sie 1 bis 15 Masseteile Phosphinsäuresalz der Formel (I) und/oder ein Diphosphinsäuresalz der Formel (II) und/oder deren Polymere (Komponente A), 1 bis 20 Masseteile halogenhaltige Komponente B sowie jeweils 0 bis 15 Masseteile Komponente C und D je 100 Masseteile duroplastischer Masse enthalten.

20. Verwendung von flammwidrigen duroplastischen Massen nach einem oder mehreren der Ansprüche 1 bis 19, für Formmassen, Beschichtungen oder Laminate aus duroplastischen Harzen.

21. Flammwidrige duroplastische Massen nach einem oder mehreren der Ansprüche 1 bis 19, **dadurch gekennzeichnet, dass** es sich bei den duroplastischen Harzen um ungesättigte Polyesterharze oder um Epoxidharze handelt.

22. Verfahren zur Herstellung von flammwidrigen duroplastischen Massen nach einem oder mehreren der Ansprüche 1 bis 21, **dadurch gekennzeichnet, dass** man ein duroplastisches Harz mit einer Flammschutzmittelkombination aus Phosphinsäuresalz der Formel (I) und/oder ein Diphosphinsäuresalz der Formel (II) und/oder deren Polymere mit mindestens eine synergistisch wirkende halogenhaltigen Komponente vermischt und die resultierende Mischung bei Drücken von 3 bis 10 bar und Temperaturen von 20 bis 60°C nass presst (Kaltpressung).

23. Verfahren zur Herstellung von flammwidrigen duroplastischen Massen nach einem oder mehreren der Ansprüche 1 bis 21, **dadurch gekennzeichnet, dass** man ein duroplastisches Harz mit einer Flammschutzmittelkombination aus Phosphinsäuresalz der Formel (I) und/oder ein Diphosphinsäuresalz der Formel (II) und/oder deren Polymere mit mindestens eine synergistisch wirkenden halogenhaltigen Komponente vermischt und die resultierende Mischung bei Drücken von 3 bis 10 bar und Temperaturen von 80 bis 150°C nass presst (Warm- öder Heißpressung).

24. Verfahren zur Herstellung von flammwidrigen duroplastischen Massen nach einem oder mehreren der Ansprüche 1 bis 21, **dadurch gekennzeichnet, dass** man ein duroplastisches Harz mit einer Flammschutzmittelkombination aus Phosphinsäuresalz der Formel (I) und/oder ein Diphosphinsäuresalz der Formel (II) und/oder deren Polymere mit mindestens eine synergistisch wirkenden halogenhaltigen Komponente vermischt und aus der resultierenden Mischung bei Drücken von 50 bis 150 bar und Temperaturen von 140 bis 160°C Kunstharzmatten fertigt.

25. Verwendung einer Flammschutzmittel-Kombination gemäß mindestens einem der Ansprüche 1 bis 21 zur flammfesten Ausrüstung von Formteilen.
